# EUROPEAN PATENT APPLICATION

(11) **EP 3 357 714 A1**
(43) Date of publication of application: **08.08.2018**
(21) Application number: 16851830.6
(22) Date of filing: 30.09.2016
(51) Int. Cl.: B60C 9/22, B29D 30/08, B60C 9/00, B60C 9/20

(54) **PNEUMATIC TIRE AND METHOD FOR MANUFACTURING SAME**

(30) Priority: 30.09.2015 JP 2015194230
(71) Applicant: The Yokohama Rubber Co., Ltd., Minato-ku Tokyo 105-8685 (JP)
(72) Inventor: MATSUDA, Kenta, Hiratsuka-shi Kanagawa 254-8601 (JP)
(74) Representative: Dilg, Haeusler, Schindelmann Patentanwaltsgesellschaft mbH
(86) International application number: PCT/JP2016/078977
(87) International publication number: WO 2017/057661

(57) **Abstract**

A pneumatic tire with improved air dispersibility during vulcanization and with effectively suppressed blistering, and a method of manufacturing the same. The pneumatic tire according to the present invention is provided with carcass layers (4) and belt layers (7), which constitute tire components that extend in a tire circumferential direction, and at least one thread (10) having a strength at break of 100 N or less that extends in the tire circumferential direction and is disposed at a step portion formed at width-directional end portions of the carcass layers (4) and the belt layers (7).

## Description

### Technical Field

The present invention relates to a pneumatic tire including at least one tire component extending in a tire circumferential direction, and a method of manufacturing the same. More specifically, to a pneumatic tire with improved air dispersibility during vulcanization and with effectively suppressed blistering, and to a method of manufacturing the same.

### Background Art

A vulcanization defect known as blistering can occur when a pneumatic tire is vulcanized. Blistering is a defect in which moisture and residual air contained in rubber, as well as residual air in steps formed at end portions of tire components when the tire is molded, collect at localized areas during vulcanization, producing air pockets that do not disperse entirely and remain present in the tire in the form of blisters. The moisture and residual air contained in the rubber produce countless air pockets during the initial stages of vulcanization, most of which are micro-dispersed and eliminated during vulcanization. However, air pockets may be concentrated at areas of low pressure during micro-dispersion and reexpand once vulcanization is complete to form blisters.

In order to suppress blistering, the tire components are compressed by a stitcher during molding in order to promote the dispersion of air, with air discharged via vent holes provided in the inner faces of a mold during vulcanization; however, these measures alone are not capable of sufficiently removing residual air within the tire.

In contrast, it has been proposed, on the basis of air bubbles easily forming between the carcass layer and adjacent members, to dispose air-absorbing organic fiber cords not coated with rubber on at least one surface of the carcass layer so that the organic fiber cords absorb residual air between the carcass layer and adjacent members, preventing the formation of air bubbles during vulcanization (for example, see Patent Document 1).

However, while it is possible, as described above, to absorb residual air between the carcass layer and adjacent members by disposing air-absorbing organic fiber cords not coated with rubber on at least one surface of the carcass layer, it is not always possible to effectively suppress blistering thereby.

### Citation List

### Patent Literature

[Patent Document 1] WO 2013/035555

### Summary of Invention

### Technical Problem

An object of the present invention is to provide a pneumatic tire with improved air dispersibility during vulcanization and with effectively suppressed blistering, and a method of manufacturing the same.

### Solution to Problem

In order to achieve the object described above, a pneumatic tire according to the present invention includes at least one tire component configured to extend in a tire circumferential direction and at least one thread having a strength at break of 100 N or less that is configured to extend in the tire circumferential direction and is disposed at a step portion formed at a width-directional end portion of the tire component.

In order to achieve the object described above, a method of manufacturing a pneumatic tire according to the present invention includes molding a green tire that includes at least one tire component configured to extend in a tire circumferential direction and at least one thread having a strength at break of 100 N or less that is configured to extend in the tire circumferential direction and is disposed at a step portion formed at a width-directional end portion of the tire component, and vulcanizing the green tire.

### Advantageous Effects of Invention

The present invention provides a pneumatic tire that includes at least one tire component that extends in a tire circumferential direction, wherein at least one thread configured to extend in the tire circumferential direction is disposed at a step portion formed at a width-directional end portion of the tire component, allowing residual air in the step portion to be more effectively dispersed by the thread, thereby improving air dispersibility during vulcanization and effectively suppressing blistering.

In the present invention, the strength at break of the thread must be 100 N or less. As the thread is intended to improve air dispersibility and is not a reinforcing member, limiting the maximum strength at break thereof allows effects upon the behavior of the tire component to be minimized. It is especially preferable that the thread be constituted by a synthetic fiber or a natural fiber.

To manufacture the pneumatic tire according to the present invention, a green tire is molded. The green tire includes at least one tire component configured to extend in a tire circumferential direction, and at least one thread having a strength at break of 100 N or less that is configured to extend in the tire circumferential direction and is disposed at a step portion formed at a width-directional end portion of the tire component. During this process, the thread may be disposed at a step portion formed at a width-directional end portion of the tire component when molding the green tire, or the thread may be disposed at a position corresponding to a step portion formed at a width-directional end portion of the tire component when molding the tire component. Once the green tire provided with the thread in the step portion formed at the width-directional end portion of the tire component has been molded as described above, the green tire need only be vulcanized.

### Brief Description of Drawings

- FIG. 1: is a meridian half cross-sectional view illustrating a pneumatic tire according to an embodiment of the present invention.
- FIG. 2: is a plan view of a belt layer and thread drawn from the pneumatic tire of FIG. 1.
- FIG. 3: is a side view of a carcass layer and thread drawn from the pneumatic tire of FIG. 1.
- FIG. 4: is a perspective view of one example of a thread insertion method used in a method of manufacturing the pneumatic tire according to the present invention.
- FIG. 5: is a plan view of another example of a thread insertion method used in the method of manufacturing a pneumatic tire according to the present invention.

### Description of Embodiments

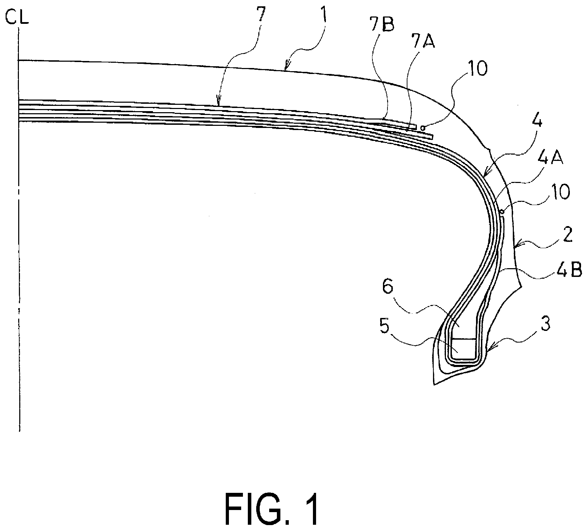

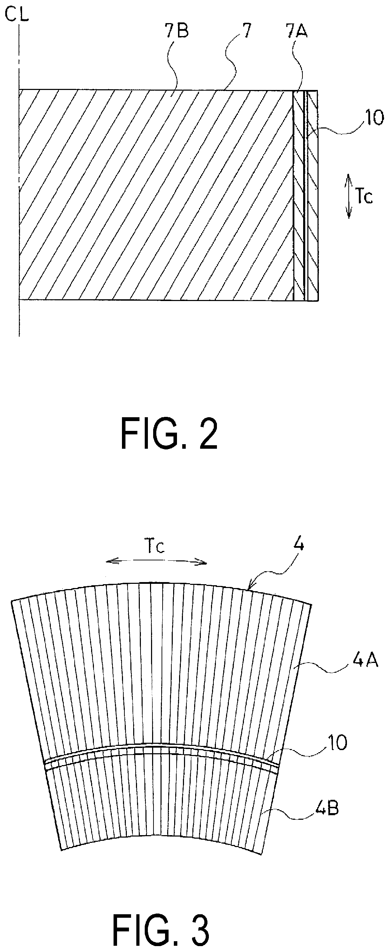

Hereinafter, configurations of the present invention are described in detail below with reference to the accompanying drawings. FIG. 1 illustrates a pneumatic tire according to an embodiment of the present invention, and FIG. 2 and 3 illustrate the main parts thereof. FIG. 1 depicts only a section on one side of a tire centerline CL; the pneumatic tire has a corresponding structure on the other side of the tire centerline CL.

In FIG. 1, 1 is a tread portion; 2 is a sidewall portion; and 3 is a bead portion. Two carcass layers 4 are mounted between a pair of left and right bead portions 3 and include a plurality of reinforcing cords that extend in a tire radial direction. The ends of the carcass layers 4 are folded back around a bead core 5 from the inside of the tire towards the outside of the tire. The carcass layers 4 each form a main body part 4A and a folded back portion 4B, with the bead core 5 acting as the border. A bead filler 6 is formed at the periphery of the bead core 5 from a rubber composition having a high degree of hardness, and enveloped by the carcass layer 4.

A plurality of belt layers 7 are embedded on an outer circumferential side of the carcass layers 4 of the tread portion 1. These belt layers 7 contain a plurality of reinforcing cords that are oblique with respect to the tire circumferential direction and are disposed in layers of intersecting directions. The belt layers 7 include an inner belt layer 7A positioned on an inner side in the tire radial direction, and an outer belt layer 7B positioned on an outer side in the tire radial direction, the width of the inner belt layer 7A being greater than the width of the outer belt layer 7B.

Various types of tire components, exemplified by the carcass layers 4 and the belt layers 7, are embedded in the pneumatic tire; as seen in FIGS. 2 and 3, at least one thread 10 having a strength at break of 100 N or less is disposed at a step portion formed at the ends in the width direction (i.e., a direction orthogonal to the tire circumferential direction) of the carcass layers 4 and the belt layers 7 so as to extend along the tire circumferential direction Tc. More specifically, a step is formed between the inner belt layer 7A and the outer belt layer 7B, and the thread 10 is disposed at the step portion. A step is also formed between the main body parts 4A and the folded back portions 4B of the carcass layers 4, and a thread 10 is disposed at these step portions. In both cases, the thread 10 is preferably disposed within 3 mm from an end surface of the tire component, such as that of the carcass layers 4 or belt layers 7. Disposing the thread 10 at a position near the end surface of the tire component allows the thread 10 to effectively function as a dispersion path for residual air at the step portion.

To manufacture the pneumatic tire as described above, a green tire is first molded. The green tire includes carcass layers 4 and belt layers 7, which are tire components that extend in the tire circumferential direction, and threads 10 disposed extending along the tire circumferential direction in step portions formed at width-directional end portions of the carcass layers 4 and the belt layers 7. The threads 10 may be inserted into the green tire at any point in time during the process of preparing the green tire.

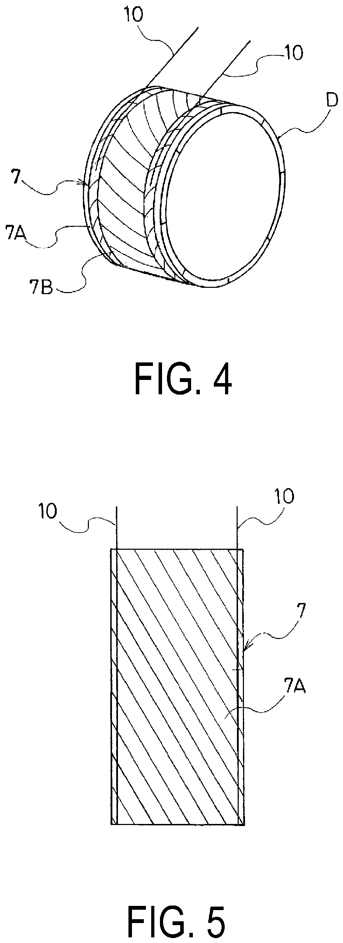

FIG. 4 depicts one example of a thread insertion method used in the method of manufacturing the pneumatic tire according to the present invention. As illustrated in FIG. 4, the threads 10 can be disposed at the step portions formed at the width-directional end portions of the belt layers 7 (tire components) in the process of molding the green tire on the outer circumference of a molding drum D. More specifically, two belt layers 7 are wrapped around the outer circumference of the molding drum D, after which threads 10 may be wrapped around the step portions between the inner belt layer 7A and the outer belt layer 7B.

FIG. 5 depicts another example of a thread insertion method used in the method of manufacturing a pneumatic tire according to the present invention. As illustrated in FIG. 5, threads 10 can be disposed in advance at positions corresponding to the step portions that will be formed at the width-directional end portions of the belt layers 7 (tire components) during the process of molding the belt layers 7. More specifically, the threads 10 may be bonded at positions on the inner belt layer 7A corresponding to the step portions that will be formed at the width-directional end portions of the outer belt layer 7B.

Once a green tire including the threads 10 disposed at the step portions formed at the width-directional end portions of the carcass layers 4 and the belt layers 7 has been molded in this way, the green tire can be vulcanized to obtain the pneumatic tire described above.

To vulcanize the pneumatic tire configured as described above, the unvulcanized tire, having molded through the tire molding process, is introduced into a mold and heated as pressure is applied to the inside of the tire by a bladder. During this process, residual moisture and air within the interior of the tire produce air pockets during the initial stages of vulcanization, but most of the air pockets produced thereby micro-disperse and are eliminated during vulcanization. However, air pockets locally congregate at areas of low pressure during micro-dispersion. In particular, residual air in the step portions formed at the width-directional end portions of the carcass layers 4 and the belt layers 7 is a cause of air bubbles. Disposing at least one thread 10 extending in the tire circumferential direction in the step portions formed at the width-directional end portions of the carcass layers 4 and the belt layers 7 allows residual air in the step portions to be more effectively dispersed by the thread 10, thereby improving air dispersibility during vulcanization and effectively suppressing blistering.

In the pneumatic tire described above, the strength at break of the thread 10 is preferably 100 N or less, and more preferably 1 N to 5 N. As the thread 10 is intended to improve air dispersibility and is not a reinforcing member, limiting the maximum strength at break thereof allows effects upon the behavior of the tire component to be minimized. Too great a strength at break on the thread 10 may have unintended effects upon tire performance.

There is no particular limitation on the material making up the thread 10; for example, synthetic fibers such as nylon, polyester, and rayon can be used, as can natural fibers such as cotton. The total fineness of the thread 10 should be in a range of 25 dtex to 170 dtex. This reduces strength at break and ensures good air dispersibility.

In the embodiments described above, the threads 10 are disposed at the step portions formed at the width-directional end portions of the carcass layers 4 and the belt layers 7; however, the threads 10 can be disposed at step portions formed at the width-directional end portions of various tire components in the present invention. Examples of such tire components include bead reinforcing layers and side reinforcing layers. Tire reinforcing members need not contain cords, but noteworthy effects can be obtained in the present invention by disposing threads 10 at step portions formed at ends of cord-containing tire reinforcing members.

### Examples

A tire according to Example 1 was manufactured by disposing at least one thread extending in the tire circumferential direction at step portions formed at width-directional end portions of a belt layer (tire component) in a size 235/40R18 pneumatic tire. A thread constituted by cotton fibers and having a total fineness of 29.5 dtex was used. The strength at break of the thread was 1 N.

Additionally, a tire according to Conventional Example 1 was also manufactured, having a structure identical to that of Example 1 except that no threads were disposed at the step portions formed at the width-directional end portions of the belt layer.

The tires according to Example 1 and Conventional Example 1 were vulcanized. Vulcanization was performed for a shorter vulcanization time than normally required to create conditions liable to produce blistering. Following vulcanization, the tires were dismantled and the number of blisters formed in the treads were checked. The results indicated that less blistering had occurred in the tire of Example 1 than in the tire of Conventional Example 1. In particular, the number of blisters formed in the tire of Example 1 was about half the number of blisters formed in the tire of Conventional Example 1.

### Reference Signs List

- 1: Tread portion
- 2: Sidewall portion
- 3: Bead portion
- 4: Carcass layer
- 5: Bead core
- 6: Bead filler
- 7: Belt layer
- 10: Thread

## Claims

1. A pneumatic tire comprising:
at least one tire component configured to extend in a tire circumferential direction; and
at least one thread having a strength at break of 100 N or less and configured to extend in the tire circumferential direction, the at least one thread being disposed at a step portion formed at a width-directional end portion of the tire component.

2. The pneumatic tire according to claim 1, wherein
the thread is constituted by a synthetic fiber or a natural fiber.

3. A method of manufacturing a pneumatic tire, the method comprising:
molding a green tire including at least one tire component configured to extend in a tire circumferential direction, and at least one thread having a strength at break of 100 N or less and configured to extend in the tire circumferential direction, the at least one thread being disposed at a step portion formed at a width-directional end portion of the tire component; and vulcanizing the green tire.

4. The method of manufacturing the pneumatic tire according to claim 3, wherein
the thread is disposed at the width-directional end portion of the tire component in the molding of the green tire.

5. The method of manufacturing the pneumatic tire according to claim 3, wherein
the thread is disposed at a position corresponding to the step portion formed at a width-directional end portion of the tire component in the molding of the tire component.

6. The method of manufacturing a pneumatic tire according to any one of claims 3 to 5, wherein
the thread is constituted by a synthetic fiber or natural fiber.
